# FASCICULE DE BREVET EUROPEEN

(11) **EP 1 950 092 B1**
(45) Date de publication et mention de la délivrance du brevet: **17.06.2009**
(21) Numéro de dépôt: 08300047.1
(22) Date de dépôt: 23.01.2008
(51) Int. Cl.: B60R 7/06

(54) **Vide poche**
Handschuhfach
Glove box

(30) Priorité: 26.01.2007 FR 0700562
(43) Date de publication de la demande: 30.07.2008
(73) Titulaire: Renault SAS, 92100 Boulogne Billancourt (FR)
(72) Inventeur: Chheang, Nakry, 78470 St Remy les Chèvreuse (FR); Helmany, Joseph, 78000 Versailles (FR)

(56) Documents cités:
- EP-A1- 1 538 288
- JP-A- 9 240 369
- US-A- 2 796 310

## Description

La présente invention concerne un vide poche muni d'un portillon et d'un éclaireur, tel qu'un vide poche fixé à un tableau de bord d'une automobile, côté passager.

On connaît, par exemple du document JP-A-09240369, un vide poche du type comprenant une cuve qui délimite le volume de rangement, un portillon monté mobile par rapport à la cuve entre une position ouverte dans laquelle il permet l'accès au volume de rangement et une position fermée, et un éclaireur solidaire de la cuve, adapté à éclairer le volume de rangement et comprenant un doigt mobile entre une position escamotée dans laquelle le circuit électrique de l'éclaireur est ouvert et une position déployée dans laquelle il est fermé, le portillon comprenant un organe de verrouillage mobile entre une position de libération dans laquelle il permet le déplacement du portillon entre ses deux positions, et une position de verrouillage dans laquelle il coopère avec un organe complémentaire de verrouillage solidaire de la cuve de façon à verrouiller le portillon dans sa position fermée.

En général, pour des raisons d'économie, un vide poche ne comprend qu'un seul éclaireur. Pour faciliter l'interaction entre l'éclaireur et le portillon, l'éclaireur est disposé de sorte que son doigt soit au plus près de l'ouverture d'accès du volume de rangement afin de recevoir en butée une partie de la surface interne du portillon. De plus, également pour des raisons d'économie, le vide poche ne comprend qu'un organe de verrouillage et qu'un organe complémentaire de verrouillage. Du fait de leur unicité, et pour optimiser leur efficacité, aussi bien l'éclaireur que l'organe de verrouillage et l'organe complémentaire de verrouillage sont disposés dans le plan central du volume de rangement (plan central par rapport à l'axe de rotation du portillon). Aussi, l'éclaireur et l'organe complémentaire de verrouillage sont disposés dans le même alignement, le doigt étant plus proche de l'ouverture d'accès que l'organe complémentaire de verrouillage (il est même saillant afin de pouvoir recevoir en butée la surface interne du portillon). De ce fait ce doigt peut être facilement endommagé, tout élément extérieur pouvant s'y accrocher quand le portillon est ouvert.

La présente invention vise à réaliser un vide poche ne présentant pas les inconvénients précités, notamment quand il ne comporte qu'un seul éclaireur et qu'un seul organe de verrouillage.

Selon l'invention, dans le vide poche du type précité, l'organe de verrouillage est conformé de sorte que, quand le portillon est dans sa position fermée verrouillée, il entraîne le doigt de l'éclaireur dans sa position escamotée.

Ainsi, le doigt de verrouillage est en retrait par rapport à l'organe de verrouillage et l'organe complémentaire de verrouillage qui le protège quand le portillon est ouvert.

D'autres particularités et avantages apparaîtront dans la description d'un mode de réalisation de la présente invention donné à titre d'exemple non limitatif et illustré par les dessins annexés dans lesquels :
La figure 1 est une vue en coupe d'un vide poche dans lequel le portillon est en position ouverte ;
La figure 2 est une vue en coupe d'un vide poche dans lequel le portillon est en position fermée, l'organe de verrouillage étant dans sa position de verrouillage ; et
La figure 3 est une vue en coupe d'un vide poche dans lequel le portillon est en position fermée, l'organe de verrouillage étant dans sa position de libération.

Un vide poche 1 comprend une cuve 2 qui délimite le volume de rangement 3 du vide poche 1 et qui est accessible de l'extérieur par une ouverture 4. La cuve 2 comprend une paroi de fond 5 qui est à l'opposé de l'ouverture 4, ainsi que des parois latérales, une paroi inférieure 6 et une paroi supérieure 7 dont les rebords libres 8,9 délimitent l'ouverture 4. Dans le présent mode de réalisation, la cuve 2 est fixée à une structure porteuse 10 par sa paroi supérieure 7.

Le vide poche 1 comprend également un éclaireur 11 qui est adapté à éclairer le volume de rangement 3 et qui est solidaire de la cuve 2. Ici, l'éclaireur 11 n'est pas fixé à la cuve 2, mais à la structure porteuse 10 afin de faciliter la connexion électrique (celle-ci se faisant avant la fixation de la cuve 2). Afin de permettre la fixation de l'éclaireur 11 à la structure porteuse 10 tout en permettant l'éclairage du volume intérieur, celui-ci est disposé au niveau de la paroi supérieure 7 de la cuve 2, dans une échancrure 12 réalisée dans cette dernière (plus précisément, l'échancrure 12 est réalisée à la partie centrale du rebord libre 9 de la paroi supérieure 7). L'éclaireur 11 comprend une ampoule 13, un logement dans lequel est disposée l'ampoule 13 et dont une paroi transparente 14 s'étend dans l'échancrure 12 et permet l'éclairage du volume de rangement 3.

Par ailleurs, l'éclaireur 11 comprend un doigt 15 qui est mobile entre une position escamotée dans laquelle le circuit électrique d'alimentation de l'ampoule 13 est ouvert et une position déployée dans laquelle il est fermé. Ici, le doigt 15 est monté coulissant selon une direction de coulissement 16 qui est sensiblement perpendiculaire au plan de l'ouverture 4.

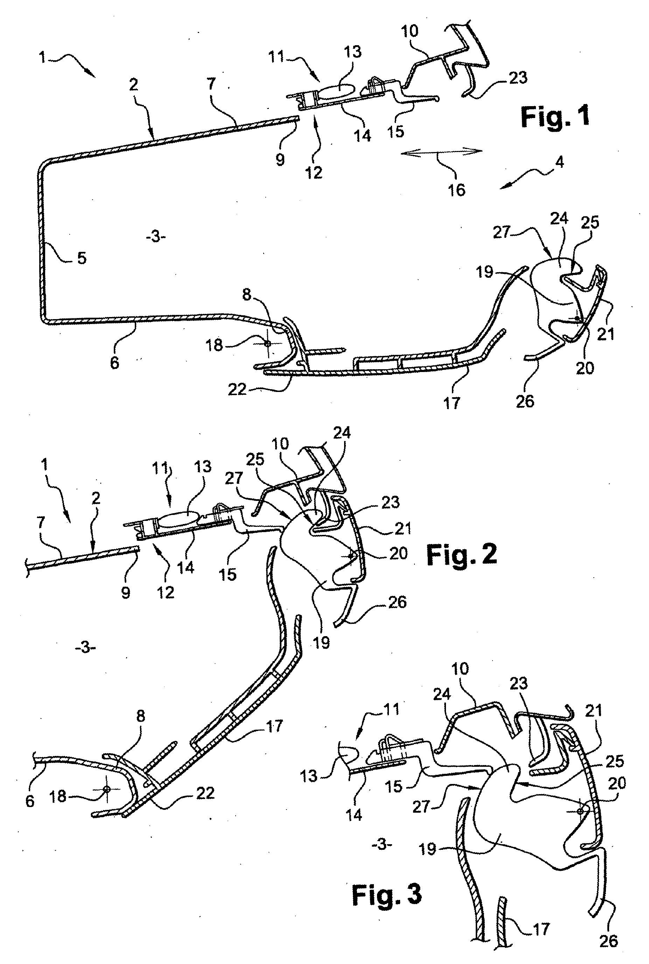

Le vide poche 1 comprend en outre un portillon 17 qui est monté mobile par rapport à la cuve 2 entre une position ouverte dans laquelle il libère l'ouverture 4 (figure 1) et une position fermée dans laquelle il l'obture et délimite ainsi le volume de rangement 3 (figure 2). Dans le présent mode de réalisation, le portillon 17 est monté sur la cuve 2 (ici, le long du rebord libre 8 de la paroi inférieure 6) de façon rotative autour d'un axe de rotation 18 (qui, ici est perpendiculaire à la direction de coulissement 16 du doigt 15).

Le portillon 17 comprend un organe de verrouillage 19 qui est mobile entre une position de libération dans laquelle il permet le déplacement du portillon 17 entre ses deux positions (figure 3), et une position de verrouillage dans laquelle il permet de verrouiller le portillon 17 dans sa position fermée (figure 2). Dans le présent mode de réalisation, l'organe de verrouillage 19 est monté sur le portillon 17 de façon pivotante autour d'un axe de pivotement 20 (qui, ici est parallèle à l'axe de rotation 18 et donc perpendiculaire à la direction de coulissement 16) de façon adjacente au rebord supérieur 21 du portillon 17 qui est opposé au rebord inférieur 22 par lequel il est monté sur la cuve 2.

Afin de verrouiller le portillon 17 dans sa position fermée, l'organe de verrouillage 19 coopère avec un organe complémentaire de verrouillage 23 qui est solidaire de la cuve 2 (ici, l'organe complémentaire de verrouillage 23 est fixé à la structure porteuse 10). L'organe complémentaire de verrouillage 23 est disposé en avant du doigt 15 de l'éclaireur 11, un espace existant entre ces deux organes.

L'organe de verrouillage 19 comporte une patte 24 dont une face avant 25 forme un crochet qui est adapté à coopérer avec l'organe complémentaire de verrouillage 23 (quand le portillon 17 est dans sa position fermée et l'organe de verrouillage 19 dans sa position de verrouillage), cette face avant 25 étant orientée vers l'extérieur du volume de rangement 3. La patte 24 est située à une première extrémité de l'organe de verrouillage 19, l'extrémité opposée portant un organe de préhension 26 accessible de l'extérieur et permettant à un utilisateur de déplacer l'organe de verrouillage entre ses deux positions. Ici, l'organe de verrouillage 19 est monobloc.

De plus, l'organe de verrouillage 19 est conformé de sorte que, quand le portillon 17 est dans sa position fermée verrouillée, il entraîne le doigt 15 de l'éclaireur 11 dans sa position escamotée. De façon plus précise, la face arrière 27 de la patte 24 de l'organe de verrouillage 19 qui est opposée à la face avant 25 formant crochet (qui est donc orientée vers l'intérieur de la cuve 2), est adaptée à coopérer avec le doigt 15. Lors de la fermeture du portillon 17, dans un premier temps, la face arrière 27 de la patte 24 vient en butée contre l'organe complémentaire de verrouillage 23. Ensuite, en poursuivant le mouvement de fermeture du portillon 17, l'organe complémentaire de verrouillage 23 entraîne le pivotement de l'organe de verrouillage 19 de sa position de verrouillage à sa position de libération. Au-delà de cette position, dépassant l'organe complémentaire de verrouillage 23, d'une part, la patte 24 verrouille le portillon 17 en s'insérant dans l'espace séparant l'organe complémentaire de verrouillage 23 du doigt 15, et d'autre part, la face arrière 27, agissant comme surface d'activation, entraîne le doigt 15 dans sa position escamotée et ouvre le circuit électrique de l'éclaireur 11. Par ailleurs, dans le présent mode de réalisation, la forme de la face arrière 27 est telle que, quand le portillon 17 est en position fermée et l'organe de verrouillage 19 dans sa position de libération, il n'est plus suffisamment en butée contre le doigt 15 qui est ainsi dans sa position déployée, le circuit électrique étant alors fermé.

Ainsi, par cette configuration avec le doigt 15 en arrière de l'organe complémentaire de verrouillage 23, celui-là est protégé par celui-ci. De plus, afin de le protéger latéralement, la cuve 2 comprend deux parois latérales le long de l'échancrure 12. En outre pour les mêmes raisons, et comme l'organe complémentaire de verrouillage est fixé non pas à la cuve 2 mais à la structure porteuse 10, l'échancrure 12 débouche au rebord libre 9 de la paroi supérieure 7, ce qui facilite la fixation de la cuve 2 une fois l'éclaireur fixé et évite de détériorer le doigt 15 saillant.

## Revendications

1. Vide poche (1) comprenant une cuve (2) qui délimite un volume de rangement (3) et qui est accessible par une ouverture (4), un éclaireur (11) qui est solidaire de la cuve (2) et qui comprend un doigt (15) mobile entre une position escamotée dans laquelle le circuit électrique de l'éclaireur (11) est ouvert et une position déployée dans laquelle il est fermé, et un portillon (17) qui est monté mobile par rapport à la cuve (2) entre une position ouverte dans laquelle il libère l'ouverture (4) et une position fermée dans laquelle il l'obture, et qui comprend un organe de verrouillage (19) mobile entre une position de libération dans laquelle il permet le déplacement du portillon (17) entre ses deux positions, et une position de verrouillage dans laquelle il coopère avec un organe complémentaire de verrouillage (23) solidaire de la cuve (2) de façon à verrouiller le portillon (2) en position fermée, **caractérisé en ce que** l'organe de verrouillage (19) est conformé de sorte que, quand le portillon (17) est dans sa position fermée verrouillée, il entraîne le doigt (15) dans sa position escamotée.

2. Vide poche (1) selon la revendication 1, **caractérisé en ce que** l'organe de verrouillage (19) comporte une patte (24) dont une face (25) forme un crochet adapté à coopérer avec l'organe complémentaire de verrouillage (23) et dont la face opposée (27) forme une surface d'activation adaptée à coopérer avec le doigt (15).

3. Vide poche (1) selon la revendication 2, **caractérisé en ce que** la surface d'activation est conformée de sorte que, quand le portillon (17) est dans sa position fermée et l'organe de verrouillage (19) dans sa position de libération, elle laisse le doigt (15) dans sa position déployée.

4. Vide poche (1) selon la revendication 2 ou 3, **caractérisé en ce que** la patte (24) est située à une première extrémité de l'organe de verrouillage (19) opposée à une seconde extrémité portant un organe de préhension (26) permettant à un utilisateur de déplacer l'organe de verrouillage (19) entre ses deux positions.

5. Vide poche (1) selon l'une des revendications 1 à 4, **caractérisé en ce que** le doigt (15) de l'éclaireur (11) est disposé entre deux parois de protection sensiblement parallèles entre elles et solidaires de la cuve (2).

6. Vide poche (1) selon l'une des revendications 1 à 5, **caractérisé en ce que** la cuve (2) et l'éclaireur (11) sont fixés à une structure porteuse (10).

7. Vide poche (1) selon la revendication 6, **caractérisé en ce que** la paroi (7) par laquelle la cuve (2) est fixée à la structure porteuse (10) comprend une échancrure (12) dans laquelle est disposé l'éclaireur (11).

8. Vide poche (1) selon la revendication 6 ou 7, **caractérisé en ce que** l'organe complémentaire de verrouillage (23) est fixé à la structure porteuse (10).

9. Vide poche (1) selon l'une des revendications 1 à 8, **caractérisé en ce que** l'organe complémentaire de verrouillage (23) est disposé en avant du doigt (15).

## Claims

1. Glove box (1) comprising: an enclosure (2) defining a storage volume (3) accessible through an opening (4) ; a light (11) mounted on the enclosure (2) and comprising a pin (15) that can be moved between a retracted position in which the electric circuit of the light (11) is open and an extended position in which it is closed; and a door (17) which is mounted on the enclosure (2) in such a way that it can move between an open position in which it reveals the opening (4) and a closed position in which it blocks it, and which comprises a locking member (19) able to be moved between a released position in which it allows the door (17) to be moved between its two positions, and a locked position in which it engages with a complementary locking member (23) mounted on the enclosure (2) in such a way as to lock the door (2) in the closed position; said glove box (1) being **characterized in that** the locking member (19) is shaped in such a way that, when the door (17) is in its closed and locked position, it moves the pin (15) to its retracted position.

2. Glove box (1) according to Claim 1, **characterized in that** the locking member (19) comprises a nose (24), one face (25) of which forms a hook suitable for engagement with the complementary locking member (23) and the opposite face (27) of which forms an activation surface suitable for acting on the pin (15).

3. Glove box (1) according to Claim 2, **characterized in that** the activation surface is so shaped that, when the door (17) is in its closed position and the locking member (19) in its released position, it leaves the pin (15) in its extended position.

4. Glove box (1) according to Claim 2 or 3, **characterized in that** the nose (24) is located at a first end of the locking member (19) remote from a second end comprising a handle (26) allowing a user to move the locking member (19) between its two positions.

5. Glove box (1) according to one of Claims 1 to 4, **characterized in that** the pin (15) of the light (11) is positioned between two protective walls approximately parallel to each other and connected to the enclosure (2).

6. Glove box (1) according to one of Claims 1 to 5, **characterized in that** the enclosure (2) and the light (11) are mounted on a supporting structure (10).

7. Glove box (1) according to Claim 6, **characterized in that** the wall (7) via which the enclosure (2) is mounted on the supporting structure (10) comprises a window (12) in which the light (11) is located.

8. Glove box (1) according to Claim 6 or 7, **characterized in that** the complementary locking member (23) is mounted on the supporting structure (10).

9. Glove box (1) according to one of Claims 1 to 8, **characterized in that** the complementary locking member (23) is located in front of the pin (15).

## Patentansprüche

1. Handschuhfach (1), umfassend eine Schale (2), die ein Verstauvolumen (3) begrenzt und die durch eine Öffnung (4) zugänglich ist, eine Leuchte (11), die fest mit der Schale (2) verbunden ist und einen Finger (15) umfasst, der zwischen einer zurückgeklappten Position, in der der Stromkreis der Leuchte (11) geöffnet ist, und einer ausgeklappten Position, in der er geschlossen ist, beweglich ist, und eine Klappe (17), die bezüglich der Schale (2) zwischen einer geöffneten Position, in der sie die Öffnung (3) freigibt, und einer geschlossenen Position, in der sie sie verschließt, beweglich angebracht ist und die ein Verriegelungsglied (19) umfasst, das zwischen einer Freigabeposition, in der es die Bewegung der Klappe (17) zwischen ihren beiden Positionen gestattet, und einer Verriegelungsposition, in der es mit einem fest mit der Schale (2) verbundenen komplementären Verriegelungsglied (23) zusammenwirkt, um die Klappe (17) in der geschlossenen Position zu verriegeln, beweglich angeordnet ist, **dadurch gekennzeichnet, dass** das Verriegelungsglied (19) so konfiguriert ist, dass es den Finger (15) in seine zurückgeklappten Position treibt, wenn sich die Klappe (17) in ihrer verriegelten geschlossenen Position befindet.

2. Handschuhfach (1) nach Anspruch 1, **dadurch gekennzeichnet, dass** das Verriegelungsglied (19) einen Ansatz (24) aufweist, von dem eine Fläche (25) einen Haken bildet, der dazu ausgeführt ist, mit dem komplementären Verriegelungsglied (23) zusammenzuwirken und dessen gegenüberliegende Fläche (27) eine Aktivierungsfläche bildet, die dazu ausgeführt ist, mit dem Finger (15) zusammenzuwirken.

3. Handschuhfach (1) nach Anspruch 2, **dadurch gekennzeichnet, dass** die Aktivierungsfläche so konfiguriert ist, dass sie den Finger (15) in seiner ausgeklappten Position lässt, wenn sich die Klappe (17) in ihrer geschlossenen Position befindet und sich das Verriegelungsglied (19) in seiner Freigabeposition befindet.

4. Handschuhfach (1) nach Anspruch 2 oder 3, **dadurch gekennzeichnet, dass** sich der Ansatz (24) an einem ersten Ende des Verriegelungsglieds (19) gegenüber einem zweiten Ende befindet, das ein Greifglied (26) trägt, das es einem Benutzer gestattet, das Verriegelungsglied (19) zwischen seinen beiden Positionen zu bewegen.

5. Handschuhfach (1) nach einem der Ansprüche 1 bis 4, **dadurch gekennzeichnet, dass** der Finger (15) der Leuchte (11) zwischen zwei im Wesentlichen parallelen Schutzwänden, zwischen denen die Schale (2) befestigt ist, angeordnet ist.

6. Handschuhfach (1) nach einem der Ansprüche 1 bis 5, **dadurch gekennzeichnet, dass** die Schale (2) und die Leuchte (11) an einer Tragstruktur (10) befestigt sind.

7. Handschuhfach (1) nach Anspruch 6, **dadurch gekennzeichnet, dass** die Wand (7), durch die die Schale (2) an der Tragstruktur (10) befestigt ist, einen Ausschnitt (12) aufweist, in dem die Leuchte (11) angeordnet ist.

8. Handschuhfach (1) nach Anspruch 6 oder 7, **dadurch gekennzeichnet, dass** das komplementäre Verriegelungsglied (23) an der Tragstruktur (10) befestigt ist.

9. Handschuhfach (1) nach einem der Ansprüche 1 bis 8, **dadurch gekennzeichnet, dass** das komplementäre Verriegelungsglied (23) vor dem Finger (15) angeordnet ist.
